# EUROPÄISCHE PATENTSCHRIFT

(11) **EP 4 219 081 B1**
(45) Veröffentlichungstag und Bekanntmachung des Hinweises auf die Patenterteilung: **06.11.2024**
(21) Anmeldenummer: 23153563.4
(22) Anmeldetag: 26.01.2023
(51) Int. Cl.: B25F 5/00, B25F 5/02

(54) **HANDGEFÜHRTES ARBEITSGERÄT**
HAND-HELD WORK DEVICE
OUTIL MANUEL

(30) Priorität: 28.01.2022 EP 22154055
(43) Veröffentlichungstag der Anmeldung: 02.08.2023
(73) Patentinhaber: Andreas Stihl AG & Co. KG, 71336 Waiblingen (DE)
(72) Erfinder: Wacker, Simon, 71334 Waiblingen (DE); Heinzelmann, Georg, 71364 Winnenden (DE)
(74) Vertreter: Karzel, Philipp

(56) Entgegenhaltungen:
- EP-A1- 3 372 348

## Beschreibung

Die Erfindung betrifft ein handgeführtes Arbeitsgerät der im Oberbegriff des Anspruchs 1 angegebenen Gattung. Ein solches ist aus der EP3372348A1 bekannt.

Es sind Arbeitsgeräte bekannt, die ein Gehäuse, einen im Gehäuse angeordneten Antriebsmotor und ein von dem Antriebsmotor angetriebenes Werkzeug umfassen. Entsprechende Arbeitsgeräte weisen ein Betätigungselement zum Betätigen des Antriebsmotors auf. Das Betätigungselement ist mit einem Sperrelement wirkverbunden, wobei das Sperrelement das Betätigungselement in einer Sperrstellung sperrt und in einer Betriebsstellung freigibt. Ferner können derartige Arbeitsgeräte auch Schalter aufweisen, die neben dem Sperrelement ebenfalls betätigt werden müssen, um ein entsprechendes Freigabesignal an eine Motorschaltung des Arbeitsgerätes zu übertragen und damit den Betrieb des Arbeitsgeräts freigeben.

Es hat sich herausgestellt, dass bei derartigen Arbeitsgeräten Fehlfunktionen beim Start oder im Betrieb des Arbeitsgerätes auftreten.

Der Erfindung liegt die Aufgabe zugrunde, ein handgeführtes Arbeitsgerät der gattungsgemäßen Art zu schaffen, das eine fehlerfreie Inbetriebnahme sowie einen zuverlässigen Betrieb des Arbeitsgeräts ermöglicht.

Diese Aufgabe wird durch ein handgeführtes Arbeitsgerät mit den Merkmalen des Anspruchs 1 gelöst.

Dem Erfindungsgedanken liegt die Erkenntnis zugrunde, dass die Ursache von fehlerhaften Inbetriebnahmen des Arbeitsgeräts oder im Betrieb des Arbeitsgerätes auftretenden Fehlern in der Fehlbetätigung des Schalters liegen können. Derartige Fehlbetätigungen sind teilweise auf Verschmutzungen im Handgriff des Arbeitsgeräts rückzuführen. Derartige Verschmutzungen können auch am Schaltelement des Schalters auftreten und dessen Funktion beinträchtigen. Dies kann insbesondere zum Ausbleiben eines Freigabesignals führen.

Das erfindungsgemäße Arbeitsgerät umfasst ein Gehäuse, einen im Gehäuse angeordneten Antriebsmotor, ein von dem Antriebsmotor angetriebenes Werkzeug und einen am Gehäuse ausgebildeten Griffabschnitt. Der Griffabschnitt weist eine Oberseite und eine der Oberseite gegenüberliegende Unterseite auf. Ferner umfasst das handgeführte Arbeitsgerät ein Betätigungselement zum Betätigen des Antriebsmotors und ein an der Oberseite des Griffabschnittes angeordnetes Sperrelement. Der Sperrhebel ist mit dem Betätigungselement wirkverbunden, wobei das Sperrelement das Betätigungselement in einer Sperrstellung sperrt und in einer Betriebsstellung freigibt. Zudem umfasst das handgeführte Arbeitsgerät eine Steuerschaltung zur Steuerung des Antriebsmotors und einen über das Sperrelement betätigbaren Schalter mit einem Schaltelement. Der Schalter sendet in aktiviertem Zustand ein Signal an die Steuerschaltung. Die Steuerschaltung ist derart ausgelegt, dass der Antriebsmotor nur bei der Erfüllung einer Gruppe von Betriebsbedingungen durch die Steuerschaltung zum Betrieb freigegeben ist, wobei mindestens eine Betriebsbedingung der Gruppe von Betriebsbedingungen der Empfang des Signals des Schalters ist. Der Schalter ist im Griffabschnitt zwischen dem Sperrelement und der Unterseite des Griffabschnittes angeordnet und derart ausgerichtet, dass das Schaltelement des Schalters der Unterseite des Griffabschnitts zugewandt ist.

Der Schalter ist derart ausgerichtet, dass dessen Schaltelement der Unterseite des Griffabschnittes zugewandt ist. Dadurch lagert sich der im Griffabschnitt befindliche Schmutz nicht auf dem Schaltelement ab, sondern fällt in der für das Arbeitsgerät vorgesehenen Betriebshaltung in Richtung zur Unterseite des Griffabschnittes. Eine Verschmutzung des Schaltelementes sowie eine daraus resultierende Beeinträchtigung der Funktion des Schalters werden vermindert. Eine zuverlässige Funktionsweise des Schalters wird gewährleistet. Folglich sind auch eine zuverlässige Inbetriebnahme und ein zuverlässiger Betrieb desselben sichergestellt.

Es ist vorteilhaft vorgesehen, dass das Sperrelement um eine erste Schwenkachse am Gehäuse schwenkbar gelagert ist, wobei das Sperrelement ein erstes Ende aufweist, das einen radial zur Schwenkachse gemessenen maximalen Endabstand zur ersten Schwenkachse aufweist, und dass ein radial zur Schwenkachse gemessener maximaler Abstand zwischen dem Schalter der Schwenkachse geringer ist als der Endabstand. Der Schalter ist in Richtung von dem ersten Ende hin zur ersten Schwenkachse vorzugsweise zwischen dem ersten Ende und der ersten Schwenkachse angeordnet. Damit liegt der Schalter unterhalb des Sperrelementes. Somit wird der Schalter zusätzlich durch das Sperrelement gegenüber Schmutzpartikeln geschützt. Die Begriffe "unterhalb/unten" und "oberhalb/oben" beziehen sich auf die Richtung der Schwerkraft. "Oberhalb/oben" entspricht einer der Schwerkraft entgegengesetzten Richtung, "unterhalb/unten" entspricht der Richtung der Schwerkraft. Derartige Richtungsangaben beziehen sich auf das Arbeitsgerät in einer für den Betrieb vorgesehen Betriebslage.

Es ist insbesondere vorgesehen, dass das Sperrelement einen Grundkörper aufweist, der sich in Richtung der ersten Schwenkachse von einer ersten Längsseite bis zu einer zweiten Längsseite erstreckt, wobei das Schaltelement des Schalters in Richtung der ersten Schwenkachse zwischen den Längsseiten angeordnet ist. Somit ist der Schalter auch in einer Querrichtung, also in der Richtung von der ersten zur zweiten Längsseite unterhalb des Sperrelementes angeordnet. Somit wird eine Verschmutzung des Schalters von Schmutzpartikeln, die von oben in das Griffgehäuse gelangen, vermieden.

Das Schaltelement des Schalters ist bevorzugt als ein Druckknopf ausgebildet. Der Druckknopf ist ein kompakt ausgebildetes Schaltelement und bildet daher wenig potentielle Verschmutzungsfläche, insbesondere gegenüber alternativen Schaltelementen, wie beispielsweise eine Schaltzunge. Dennoch kann es in einer alternativen Ausführung zweckmäßig sein, auch andere Schaltelemente vorzusehen.

Es ist vorteilhaft vorgesehen, dass das Schaltelement des Schalters einen Abstand zur Schwenkachse des Sperrelements aufweist, der weniger als 80%, vorzugsweise weniger als 60% des Endabstands aufweist.

Vorzugsweise weist das Sperrelement eine Schaltzunge zur Betätigung des Schaltelements des Schalters auf. Die Schaltzunge weist vorzugsweise einen gekröpften Endabschnitt auf, wobei der gekröpfte Endabschnitt zur Betätigung des Schalters dient. Die Schaltzunge ist in gesperrter Stellung zwischen der Unterseite des Griffabschnittes und dem Schalter angeordnet. Dadurch umgibt die Schaltzunge den Schalter und bildet zusätzlichen Schutz vor Verschmutzung des Schaltelements.

Es ist vorzugsweise vorgesehen, dass an der Unterseite des Griffabschnittes eine Reinigungsöffnung ausgebildet ist. Über die Reinigungsöffnung können Verschmutzungen an der Unterseite über die Öffnung aus dem Griffabschnitt entfernt werden.

Es ist bevorzugt vorgesehen, dass in Betriebsstellung des Sperrelementes der gekröpfte Endabschnitt der Schaltzunge derart benachbart zur Reinigungsöffnung angeordnet ist, dass Verschmutzungen im Griffabschnitt über die Schaltzunge aus der Reinigungsöffnung befördert werden. Somit wird mit jeder Betätigung des Sperrelementes eine Reinigung der Unterseite durchgeführt. Die Unterseite des Griffabschnitts wird somit mit jeder Betätigung des Arbeitsgeräts von Verschmutzungen an der Unterseite befreit. So können Fehlfunktionen verursacht durch Verschmutzungen im Griffabschnitt vermieden werden.

Es ist vorteilhaft vorgesehen, dass der Grundkörper des Sperrelementes eine erste Aussparung aufweist, wobei der Schalter in der Betriebsstellung des Sperrelementes in der ersten Aussparung angeordnet ist. Durch die Anordnung des Schalters in der ersten Aussparung des Sperrelementes bildet das Sperrelement für den Schalter eine Art Umhausung, die diesen vor Verschmutzung schützt.

Das Schaltelement des Schalters ist in der Sperrstellung des Sperrelementes durch das Sperrelement betätigt, wodurch der Schalter deaktiviert ist. Das Schaltelement des Schalters ist vorzugsweise mit Betriebsstellung des Sperrelementes unbetätigt, wodurch der Schalter aktiviert ist. Vorzugsweise gibt der Schalter lediglich in seiner Betriebsstellung ein Freigabesignal aus, das zur Inbetriebnahme des Arbeitsgerätes notwendig ist. Dies hat zur Folge, dass die Steuerschaltung ein Freigabesignal empfangen muss, um den Antriebsmotor starten zu können. Liegt beispielsweise ein Kabelbruch des Signalkabels des Schalters vor, kann kein Freigabesignal mehr übertragen werden. Durch diesen Umstand wird die Inbetriebnahme des Arbeitsgerätes bei gebrochenem Signalkabel verhindert.

Es ist vorzugsweise vorgesehen, dass der Schalter eine auf das Schaltelement wirkende Betätigungsfeder aufweist, und dass das Sperrelement in unbetätigtem Zustand über eine Rückstellfeder in der Sperrstellung gehalten ist, wobei in der Sperrstellung des Sperrelementes die Rückstellfeder derart auf die Betätigungsfeder des Schalters wirkt, dass der Schalter deaktiviert ist.

Ein Ausführungsbeispiel der Erfindung wird im Folgenden anhand der Zeichnung erläutert. Es zeigen:
- Fig. 1: in einer Seitendarstellung ein Arbeitsgerät,
- Fig. 2: in einer Explosionsdarstellung einen Griffabschnitt mit Sperrelement, Betätigungselement und Schalter,
- Fig. 3: in einer ausschnittsweisen Schnittdarstellung einen Griffabschnitt in Sperrstellung,
- Fig. 4: in einer ausschnittsweisen Schnittdarstellung den Griffabschnitt mit dem Sperrhebel in Betriebsstellung und
- Fig. 5: in einer ausschnittsweisen perspektivischen Darstellung den Unterboden des Griffabschnitts mit Reinigungsöffnung.

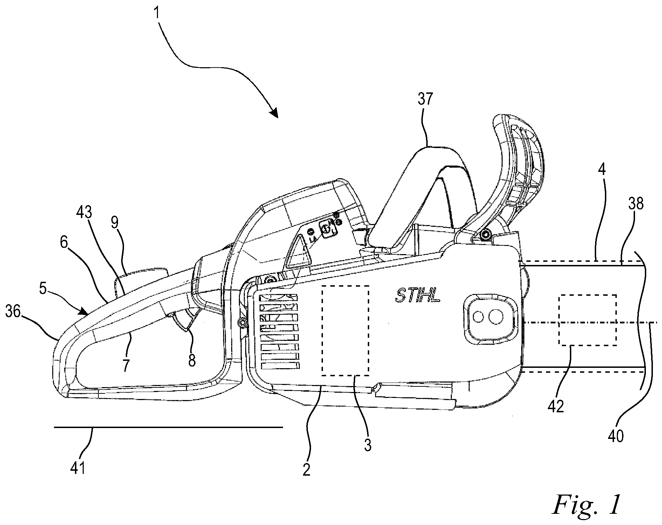

In Fig. 1 ist ein Arbeitsgerät 1 gezeigt, das als Motorkettensäge ausgeführt ist. Das Arbeitsgerät 1 umfasst ein Gehäuse 2, und ein im Gehäuse 2 angeordneten Antriebsmotor 3. Der Antriebsmotor 3 ist lediglich schematisch durch ein strichliertes Rechteck dargestellt. Der Antriebsmotor 3 ist im bevorzugten Ausführungsbeispiel ein Elektromotor, kann jedoch alternativ auch als Verbrennungsmotor ausgebildet sein. Der Antriebsmotor 3 ist über einen Akku oder über ein Anschlusskabel mit Energie versorgt. Das Arbeitsgerät umfasst ein vom Antriebsmotor 3 angetriebenes Werkzeug 4, das im Ausführungsbeispiel als Sägekette ausgebildet ist. An dem Gehäuse 2 ist ein hinterer Handgriff 36 sowie ein Griffrohr 37 zum Führen des Arbeitsgeräts 1 festgelegt. An der dem hinteren Handgriff 36 gegenüberliegenden Seite des Gehäuses 2 ragt eine Führungsschiene 38 nach vorn. An der Führungsschiene 38 ist die Sägekette umlaufend angeordnet. Alternativ kann das handgeführte Arbeitsgerät beispielsweise auch ein Trennschleifer, ein Blasgerät, ein Freischneider, eine Heckenschere oder ähnliches sein.

Der Antriebsmotor 3 treibt eine Antriebswelle an, die aus dem Gehäuse 2 ragt. Auf der Antriebswelle ist ein Antriebskettenrad angeordnet. Das Antriebskettenrad dient zum Antrieb der Sägekette, die im Betrieb über das Antriebskettenrad geführt ist. Das Arbeitsgerät 1 umfasst ferner eine Spannvorrichtung, über welche die Führungsschiene 38 in ihrer Längsrichtung nach vorne weg vom Antriebskettenrad verschiebbar ist und somit die Sägekette gespannt werden kann.

Wie in Fig. 1 gezeigt, besitzt die Führungsschiene 38 eine Längsachse 40. Die Längsachse 40 verläuft in einem auf einem ebenen horizontalen Boden 41 abgestellten Zustand des Arbeitsgeräts 1 mittig durch die Führungsschiene 38 in etwa parallel zum horizontalen Boden 41. Der Begriff "in etwa" ist derart zu verstehen, dass die Längsachse 40 mit dem Boden 41 einen Winkel von höchstens 15° einschließt. Die Führungsschiene 38 besitzt eine Längsebene 42, welche in einem auf einem ebenen horizontalen Boden 41 abgestellten Zustand des Arbeitsgerätes 1 die Längsachse 40 enthält und senkrecht zum Boden 41 steht.

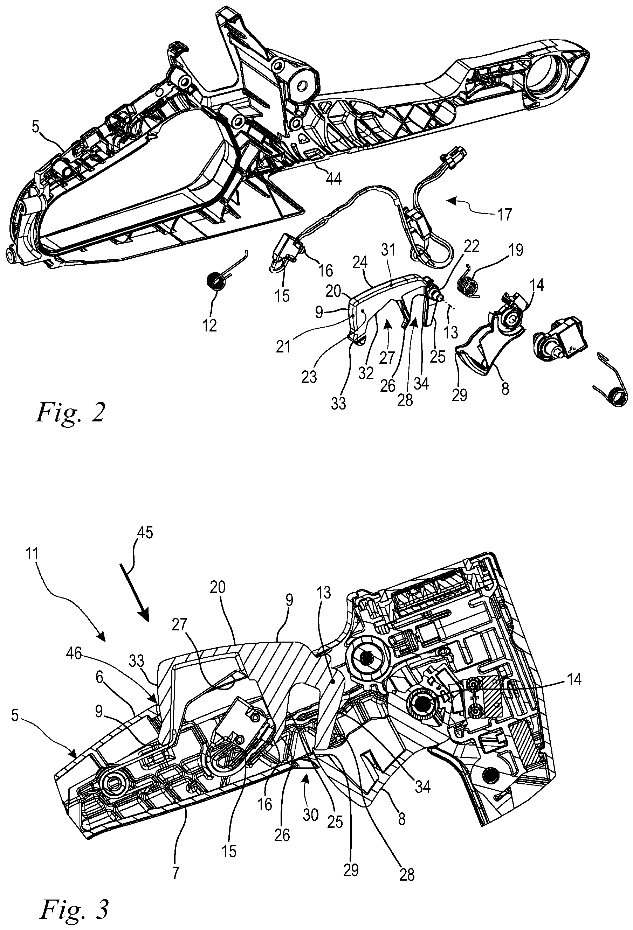

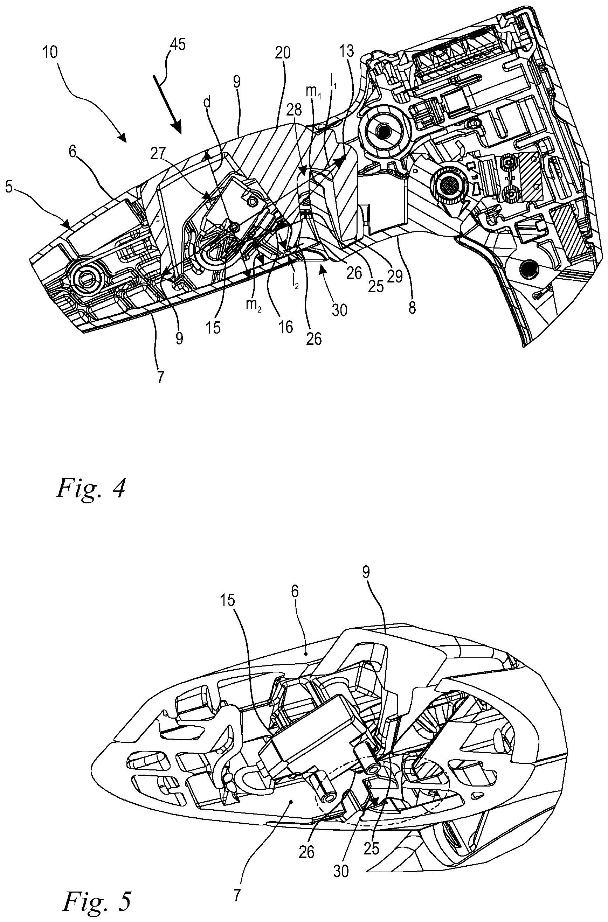

Wie in Fig. 1 gezeigt, weist das Gehäuse 2 einen Griffabschnitt 5 auf, wobei der Griffabschnitt 5 im Ausführungsbeispiel am hinteren Handgriff 36 vorgesehen ist. Am Griffabschnitt 5 sind ein Sperrelement 9 und ein Betätigungselement 8 angeordnet. Das Betätigungselement 8 dient zur Betätigung des Antriebmotors 3. Das Betätigungselement 8 ist im Ausführungsbeispiel als ein Betätigungshebel ausgebildet. Das Sperrelement 9 ist mit dem Betätigungselement 8 wirkverbunden. Das Sperrelement 9 sperrt das Betätigungselement 8 in einer Sperrstellung 11 (Fig. 3) und gibt das Betätigungselement 8 in einer Betriebsstellung 10 (Fig. 4) frei. Das Sperrelement 9 ist im Ausführungsbeispiel als ein Sperrhebel ausgebildet.

Wie in Fig. 1 gezeigt, weist der Griffabschnitt 5 eine Oberseite 6 und eine der Oberseite 6 gegenüberliegende Unterseite 7 auf. Im Ausführungsbeispiel ist das Sperrelement 9 an der Oberseite 6 angeordnet. Das Betätigungselement 8 ist an der Unterseite 7 des Griffabschnittes 5 gebildet. Der Griffabschnitt 5 ist ein Teil des Gehäuses 2, an welchem das Betätigungselement 8 und das Sperrelement 9 angeordnet sind. Bevorzugt umfasst der Griffabschnitt 5 auch einen Griffbereich 43, der zum Halten des Arbeitsgerätes 1 in Betrieb des Arbeitsgerätes 1 vorgesehen ist.

In Fig. 2 ist ein Gehäuseteil 44 gezeigt, das als Tragelement des Arbeitsgerätes 1 ausgebildet ist. An dem Gehäuseteil 44 sind der Antriebsmotor 3, die Führungsschiene 38, das Betätigungselement 8, das Sperrelement 9 und andere Bauteile des Arbeitsgerätes 1 zumindest mittelbar gehalten. Ferner bildet das Gehäuseteil 44 zumindest teilweise einen hinteren Handgriff 36 (Fig. 1) des Arbeitsgerätes 1 mit dem Griffabschnitt 5.

Wie in den Figuren 2 und 3 gezeigt, ist das Sperrelement 9 an dem Griffabschnitt 5 schwenkbar um eine erste Schwenkachse 13 gelagert. Das Arbeitsgerät 1 umfasst eine erste Rückstellfeder 12, wobei die erste Rückstellfeder 12 auf das Sperrelement 9 wirkt und das Sperrelement 9 in die Sperrstellung 11 vorspannt. Die erste Rückstellfeder 12 ist im Ausführungsbeispiel als eine Schenkelfeder ausgebildet. Die Rückstellfeder 12 ist an dem Griffabschnitt 5 angeordnet und wirkt mit einem Schenkel auf das Sperrelement 12.

Wie in den Figuren 2 und 3 gezeigt, ist das Betätigungselement 8 an dem Griffabschnitt 5 schwenkbar um eine zweite Schwenkachse 19 gelagert. Das Arbeitsgerät 1 weist eine zweite Rückstellfeder 19 auf, wobei die zweite Rückstellfeder 19 auf das Betätigungselement 8 wirkt und das Betätigungselement 8 in eine Außerbetriebsstellung vorspannt, in der der Antriebsmotor 3 unbetätigt ist. An dem Sperrelement 9 ist ein erster Schenkel 33 und ein zweiter Schenkel 34 ausgebildet, wobei der zweite Schenkel 34 mit einer Haltekontur 29 des Betätigungselementes 8 wirkverbunden ist. Befindet sich das Sperrelement 9 in Sperrstellung 11, ist der zweite Schenkel 34 des Sperrelementes 9 derart ausgerichtet, dass der zweite Schenkel 34 mit seiner Stirnseite über die Haltekontur 29 ein Schwenken des Betätigungshebels 8 in eine den Antriebsmotor 3 betätigte Stellung blockiert. Erst durch das Schwenken des Sperrelementes 9 gibt der zweite Schenkel 34 die Haltekontur 29 des Betätigungselementes 8 frei, wodurch ein Schwenken des Betätigungselementes 8 möglich ist.

Wie in den Figuren 2 und 3 gezeigt, umfasst das Arbeitsgerät 1 einen Schalter 15 mit einem Schaltelement 16. Der Schalter 15 ist am Gehäuse 2 gehalten. Der Schalter 15 ist mittels des Sperrelementes 9 betätigbar. Ist der Schalter 15 aktiviert, gibt dieser ein Signal aus.

Ferner umfasst das Arbeitsgerät eine Steuerschaltung 17. Die Steuerschaltung 17 dient zur Steuerung des Antriebsmotors 3. Die Steuerschaltung 17 ist derart ausgelegt, dass der Antriebsmotor 3 nur bei der Erfüllung einer Gruppe von Betriebsbedingungen durch die Steuerschaltung 17 freigegeben ist. Mindestens eine Betriebsbedingung der Gruppe von Betriebsbedingungen ist der Empfang des vom Schalter 15 gesendeten Signals. Es kann in einer alternativen Ausführung des Arbeitsgerätes 1 auch vorgesehen sein, weitere Betriebsbedingungen, wie beispielsweise die Aktivierung eines An-Aus-Schalters des Arbeitsgerätes 1, vorzusehen, bei deren Erfüllung der Betrieb des Antriebsmotors 3 durch die Steuerschaltung 17 freigegeben wird. Um also den Antriebsmotor 3 aktivieren zu können, ist das Sperrelement 9 zu drücken. Dadurch wird zum einen das Betätigungselement 8 mechanisch freigegeben, zum anderen wird der Schalter 15 aktiviert, wodurch der Antriebsmotor 3 auch durch die Steuerschaltung 17 freigegeben ist.

Die Steuerschaltung 17 ist im bevorzugten Ausführungsbeispiel als eine rechnerbasierte Steuereinheit ausgebildet, die zur rechnergestützten Signalverarbeitung dient. Folglich kann das vom Schalter 15 gesendete Signal ein Informationssignal sein, das in der Steuereinheit weiterverarbeitet wird. Ferner kann es zweckmäßig sein, als Steuerschaltung 17 lediglich eine elektronische Schaltung vorzusehen. In einer solchen Ausführung entspricht das Ausbleiben eines Freigabesignals einer Unterbrechung des Stromkreises durch den Schalter, das Abgeben eines Freigabesignals dem Schließen des Stromkreises zur Inbetriebnahme des Antriebsmotors 3.

Wie in den Figuren 2 und 3 gezeigt, umfasst das Sperrelement 9 eine Schaltzunge 25 zur Betätigung des Schaltelementes 16 des Schalters 15. Wie in Fig. 3 gezeigt, ist in der Sperrstellung 11 des Sperrelementes 9 der Schalter 15 durch das Sperrelement 9 betätigt. In dem den Schalter 15 betätigten Zustand kontaktiert die Schaltzunge 25 des Sperrelementes 9 das Schaltelement 16 des Schalters 15. In der betätigten Stellung des Schalters 15 ist der Schalter 15 deaktiviert, demnach der Schalter 15 kein Signal an die Steuerschaltung 17 ausgibt. Wird das Sperrelement 9 durch den Bediener in die Betriebsstellung 10 des Sperrelementes 9 betätigt, gibt die Schaltzunge 25 des Sperrelementes 9 das Schaltelement 16 des Schalters 15 frei. In dem den Schalter 15 unbetätigten Zustand ist die Schaltzunge 25 des Sperrelementes 9 zu dem Schaltelement 16 des Schalters 15 beabstandet. Ein Kontakt zwischen der Schaltzunge 25 und dem Schaltelement 16 liegt nicht vor. In der unbetätigten Stellung des Schalters 15 ist der Schalter 15 aktiviert, demnach der Schalter 15 ein Signal an die Steuerschaltung 17 ausgibt. Die Steuerschaltung 17 gibt den Betrieb des Antriebsmotors 3 frei. Der Schalter 15 weist eine auf das Schaltelement 16 wirkende, nicht näher dargestellte Betätigungsfeder auf. In der Sperrstellung 11 des Sperrelementes 9 wirkt die Rückstellfeder 12 derart auf das Sperrelement 9, dass das Schaltelement 16 des Schalters 15 entgegen der Federkraft der Betätigungsfeder in die betätigte Stellung gespannt ist. Der Schalter 15 ist folglich deaktiviert. Das Schaltelement 16 ist im bevorzugten Ausführungsbeispiel lediglich als Druckknopf ausgebildet, demnach das Sperrelement 9 unmittelbar den Druckknopf kontaktiert. Es kann in einer alternativen Ausführung des Arbeitsgerätes 1 auch zweckmäßig sein, neben dem Druckknopf eine Schaltzunge am Schalter 16 vorzusehen.

Wie in den Figuren 3 und 4 gezeigt, ist der Schalter 15 zwischen einem Teil des Sperrelements 9 und der Unterseite 7 des Griffabschnittes 5 angeordnet. Der Schalter 15 und das Sperrelement 19 sind dabei derart zueinander angeordnet, dass in einer Blickrichtung 45 von der Oberseite 6 des Griffabschnittes zur Unterseite 7 des Griffabschnittes 5 hin der Schalter 15 durch das Sperrelement 9 zumindest teilweise, vorzugsweise vollständig verdeckt ist. Das Schaltelement 16 des Schalters 15 ist in einer Blickrichtung 45 von der Oberseite 6 des Griffabschnittes zur Unterseite 7 des Griffabschnittes 5 durch das Sperrelement 9 vollständig verdeckt. Die beschriebene Blickrichtung 45 ist senkrecht zur Schwenkachse 13 des Sperrelementes 9. Der Schalter 15 ist derart im Griffabschnitt 5 angeordnet, dass das Schaltelement 16 des Schalters 15 der Unterseite 7 des Griffabschnittes 5 zugewandt ist.

Wie in den Figuren 3 und 4 gezeigt, ist ein Teil des Sperrelements 9, insbesondere die Schaltzunge 25, zwischen dem Schalter 15 und der Unterseite 7 des Griffabschnittes 5 angeordnet. Die Schaltzunge 25 erstreckt sich somit unter den Schalter 15.

Wie in den Figuren 2, 3 und 4 gezeigt, weist das Sperrelement 9 einen Grundkörper 20 auf, der sich stirnseitig von einem ersten Ende 21 bis zu einem zweiten Ende 22 erstreckt. Die Schwenkachse 13 des Sperrelementes 9 liegt zwischen dem ersten Ende 21 und dem zweiten Ende 22 des Grundkörpers 20. Die stirnseitigen Enden 21, 22 des Grundkörpers 20 sind über eine erste Längsseite 23 und eine zweite Längsseite 24 miteinander verbunden. Der Grundkörper 20 des Sperrelementes 9 erstreckt sich entlang der ersten Schwenkachse 13 von seiner ersten Längsseite 23 bis zu seiner zweiten Längsseite 24. Ferner sind die stirnseitigen Enden 21, 22 über eine Oberseite 31 und eine Unterseite 32 miteinander verbunden. Die Unterseite 32 des Grundkörpers 20 ist der Unterseite 7 des Griffabschnittes 5 zugewandt. Die Oberseite 31 des Grundkörpers 20 ist der Unterseite 7 des Griffabschnittes 5 abgewandt.

Wie in den Figuren 2, bis 5 gezeigt, umfasst der Grundkörper 20 des Sperrelementes 9 den an seinem stirnseitigen, ersten Ende 21 ausgebildeten ersten Schenkel 33 und den an seinem stirnseitigen, zweiten Ende 22 ausgebildeten zweiten Schenkel 34. Die Schaltzunge 25 des Grundkörpers 20 ist zwischen dem ersten Schenkel 33 und dem zweiten Schenkel 34 angeordnet. Die beiden Schenkel 33, 34 sowie die Schaltzunge 25 erstrecken sich in Betriebsstellung 10 des Sperrelementes 9 in ihrer Längsrichtung in Richtung von der Oberseite 6 des Griffabschnittes 5 zur Unterseite 7 des Griffabschnittes 5 hin. Der Grundkörper 20 des Sperrelementes 9 umfasst eine erste Aussparung 27 und eine zweite Aussparung 28. Die erste Aussparung 27 ist zwischen dem ersten Schenkel 33 und der Schaltzunge 25 ausgebildet. Die zweite Aussparung 28 ist zwischen der Schaltzunge 25 und dem zweiten Schenkel 34 ausgebildet.

Wie in Fig. 4 gezeigt, ist erste Aussparung 27 derart ausgebildet, dass in der Betriebsstellung 10 des Sperrelementes 9 der Schalter 15 vorzugsweise vollständig in der ersten Aussparung 27 angeordnet ist. Demnach liegt der Schalter 15 in Betriebsstellung 10 des Sperrelementes 9 seitlich zwischen dem ersten Schenkel 33 und der Schaltzunge 25 des Grundkörpers 20 des Sperrelementes 9. Der Schalter 15 ist in anderen Worten von dem ersten Schenkel 33 und der Schaltzunge 25 umgeben. Die zweite Aussparung 28 des Grundkörpers 20 ist derart ausgebildet, dass in der Betriebsstellung 10 des Sperrelementes 9 die Haltekontur 29 des Betätigungselementes 8 in der zweiten Aussparung 28 des Grundkörpers 20 des Sperrelementes 9 angeordnet ist.

Wie in den Figuren 3 und 4 gezeigt, ist der Schalter 15 unterhalb zumindest einem Teil des Sperrelementes 9 angeordnet. Somit bildet das Sperrelement 9 eine Art Schutzvorrichtung vor Verschmutzung des Schalters 15. Der Schalter 15 ist in einer Richtung von dem ersten Ende 21 zum zweiten Ende 22 hin bezogen auf die Betriebsstellung 10 des Sperrelementes 9 zwischen dem ersten Ende 21 und dem zweiten Ende 22 des Grundkörpers angeordnet. Ferner ist der Schalter 15 in Richtung der ersten Schwenkachse 13 zumindest teilweise, insbesondere vollständig zwischen der ersten Längsseite 23 und der zweiten Längsseite 24 angeordnet. Besonders bevorzugt ist der Schalter 15 derart zum Sperrelement 9 ausgerichtet, dass das Schaltelement 16 vollständig zwischen der ersten Längsseite 23 und der zweiten Längsseite 24 des Grundkörpers 20 des Sperrelementes 9 angeordnet ist.

Wie in den Figuren 3 und 4 gezeigt, weist das erste Ende 21 des Grundkörpers 20 einen radial zur Schwenkachse 13 des Sperrelementes 9 gemessenen maximalen Endabstand l₁ zur ersten Schwenkachse 13 auf. Der Schalter 15 ist zwischen der Schwenkachse 13 und dem ersten Ende 21 des Grundkörpers 20 angeordnet. Vorzugsweise ist ein radial zur Schwenkachse 13 gemessener, maximaler Abstand zwischen dem Schalter 15 und der Schwenkachse 13 geringer ist als der Endabstand l₁. In der bevorzugten Ausführung weist das Schaltelement 16 des Schalters 15 einen Abstand m₁ zur Schwenkachse 13 des Sperrelementes 9 auf, der weniger als 80%, vorzugsweise weniger als 60% des Endabstands l₁ beträgt. Bevorzugt weist das Schaltelement 16 des Schalters 15 einen Bodenabstand m₂ zur Unterseite 7 des Griffabschnittes 5 auf, wobei der Abstand m₂ mindestens 15%, vorzugsweise in etwa 20% des maximalen Abstands d zwischen der Oberseite 6 und der Unterseite 7 des Griffabschnittes 5 im Bereich des Schalters entspricht.

Wie in den Figuren 3 und 4 gezeigt, umfasst die Schaltzunge 25 einen gekröpften Endabschnitt 26. Der gekröpfte Endabschnitt 26 der Schaltzunge 25 dient zur Betätigung des Schaltelementes 16. Durch die Kröpfung kann die Schaltzunge 25 das Schaltelement 16 des Schalters 15 betätigen, obwohl das Schaltelement 16 des Schalters 15 zur Unterseite 7 des Griffabschnittes 5 hin ausgerichtet ist und der Grundkörper 20 des Sperrhebels 9 im Wesentlichen oberhalb des Schalters 15 angeordnet ist. Der gekröpfte Endabschnitt 26 der Schaltzunge 25 ist zumindest teilweise zwischen der Unterseite 7 des Griffabschnittes 5 und dem Schalter 15 angeordnet. In Betriebsstellung 10 des Sperrhebels 9 ist ein Abstand l₂ des gekröpften Endabschnittes 26 zur Unterseite 7 des Griffabschnittes 5 kleiner als 20% des Bodenabstandes m₂ zwischen dem Schaltelement 16 und der Unterseite 7 des Griffabschnittes 5. Mittels des gekröpften Endabschnittes 16 umgreift die Schaltzunge 25 den Schalter 25 und dadurch bietet zusätzlichen Schutz vor Verschmutzung.

Wie in den Figuren 3 bis 5 gezeigt, ist an der Unterseite 7 des Griffabschnittes 5 eine Reinigungsöffnung 30 ausgebildet. Über die Reinigungsöffnung 30 können Verschmutzungen im Innenraum des Griffabschnittes 5 ausgeschoben werden. Der gekröpfte Endabschnitt 26 der Schaltzunge 25 ist in Betriebsstellung 10 des Sperrelementes 9 derart benachbart zur Reinigungsöffnung 30 angeordnet, dass Verschmutzungen im Griffabschnitt 5 über die Schaltzunge 25 aus der Reinigungsöffnung 30 befördert werden. Die Reinigungsöffnung 30 ist zudem benachbart zur Haltekontur 28 des Betätigungselementes 8 in unbetätigtem Zustand angeordnet. Die Reinigungsöffnung 30 erstreckt sich in einer Längsrichtung und/oder in einer Querrichtung jeweils in einem Maße, das mindestens 40%, vorzugsweise mindestens 60%, insbesondere mindestens 80% des Abstands zwischen der ersten Längsseite 23 des Grundkörpers 20 des Sperrelementes 9 und der zweiten Längsseite 24 des Grundkörpers 20 des Sperrelementes 9 entspricht. Vorzugsweise entspricht die Querrichtung der Reinigungsöffnung 30 in etwa dem Abstand zwischen der ersten Längsseite 23 des Grundkörpers 20 des Sperrelementes 9 und der zweiten Längsseite 24 des Grundkörpers 20 des Sperrelementes 9. Somit können Verschmutzungen effektiv über die gesamte Breite der Schaltzunge 25 durch die Reinigungsöffnung 30 geschoben werden. Zudem ist an der Oberseite 6 des Griffabschnittes 5 eine Hebelöffnung 46 vorgesehen, durch die das Sperrelement 9 in Sperrstellung 11 des Sperrelementes 9 taucht und aus dem Griffabschnitt 5 ragt. Somit kann der Bediener das Sperrelement 9 betätigen. Der maximale Abstand zwischen dem Sperrelement 9 und dem Griffabschnitt 5 im Bereich der Hebelöffnung 46 ist kleiner als die Querrichtung und/oder die Längsrichtung der Reinigungsöffnung 30. Dadurch ist gewährleistet, dass Schmutzpartikel, die über die Hebelöffnung 46 in den Griffabschnitt 5 gelangen, durch die Reinigungsöffnung 30 wieder aus dem Griffabschnitt 5 befördert werden können.

## Patentansprüche

1. Handgeführtes Arbeitsgerät
umfassend
- ein Gehäuse (2),
- einen im Gehäuse (2) angeordneten Antriebsmotor (3),
- ein von dem Antriebsmotor (3) angetriebenes Werkzeug (4),
- einen am Gehäuse (2) ausgebildeten Griffabschnitt (5), wobei der Griffabschnitt (5) eine Oberseite (6) und eine der Oberseite (6) gegenüberliegende Unterseite (7) aufweist,
- ein Betätigungselement (8) zum Betätigen des Antriebsmotors (3),
- ein an der Oberseite (6) des Griffabschnittes (5) angeordnetes Sperrelement (9), wobei der Sperrhebel (9) mit dem Betätigungselement (8) wirkverbunden ist, wobei das Sperrelement (9) das Betätigungselement (8) in einer Sperrstellung (11) sperrt und in einer Betriebsstellung (10) freigibt,
- eine Steuerschaltung (17) zur Steuerung des Antriebsmotors (3),
- einen über das Sperrelement (9) betätigbaren Schalter (15) mit einem Schaltelement (16), wobei der Schalter (15) in aktiviertem Zustand ein Signal an die Steuerschaltung (17) sendet,
wobei die Steuerschaltung (17) derart ausgelegt ist, dass der Antriebsmotor (3) nur bei der Erfüllung einer Gruppe von Betriebsbedingungen durch die Steuerschaltung (17) zum Betrieb freigegeben ist, wobei mindestens eine Betriebsbedingung der Gruppe von Betriebsbedingungen der Empfang des Signals des Schalters (15) ist,
**dadurch gekennzeichnet, dass** der Schalter (15) im Griffabschnitt (5) zwischen dem Sperrelement (9) und der Unterseite (7) des Griffabschnittes (5) angeordnet ist und derart ausgerichtet ist, dass das Schaltelement (16) des Schalters (15) der Unterseite (7) des Griffabschnittes (5) zugewandt ist.

2. Arbeitsgerät nach Anspruch 1,
**dadurch gekennzeichnet, dass** das Sperrelement (9) um eine erste Schwenkachse (13) am Gehäuse (2) schwenkbar gelagert ist, wobei das Sperrelement (9) ein erstes Ende (21) aufweist, das einen radial zur Schwenkachse (13) gemessenen maximalen Endabstand (l₁) zur ersten Schwenkachse (13) aufweist, und dass ein radial zur Schwenkachse (13) gemessener, maximaler Abstand zwischen dem Schalter (15) und der Schwenkachse (13) geringer ist als der Endabstand (l₁).

3. Arbeitsgerät nach Anspruch 2,
**dadurch gekennzeichnet, dass** der Schalter (15) in Richtung von dem ersten Ende (21) hin zur ersten Schwenkachse (13) zwischen dem ersten Ende (21) und der ersten Schwenkachse (13) angeordnet ist.

4. Arbeitsgerät nach Anspruch 2 oder 3,
**dadurch gekennzeichnet, dass** das Sperrelement (9) einen Grundkörper (20) aufweist, der sich in Richtung der ersten Schwenkachse (13) von einer ersten Längsseite (23) bis zu einer zweiten Längsseite (24) erstreckt, wobei das Schaltelement (16) des Schalters (15) in Richtung der ersten Schwenkachse (13) zwischen den Längsseiten (23, 24) angeordnet ist.

5. Arbeitsgerät nach einem der Ansprüche 1 bis 4,
**dadurch gekennzeichnet, dass** das Schaltelement (16) des Schalters (15) als ein Druckknopf ausgebildet ist.

6. Arbeitsgerät nach einem der Ansprüche 2 bis 5,
**dadurch gekennzeichnet, dass** das Schaltelement (16) des Schalters (15) einen Abstand (m₁) zur Schwenkachse (13) des Sperrelementes (9) aufweist, der weniger als 80% des Endabstands (l₁) aufweist.

7. Arbeitsgerät nach einem der Ansprüche 1 bis 6,
**dadurch gekennzeichnet, dass** das Sperrelement (9) eine Schaltzunge (25) zur Betätigung des Schaltelementes (16) des Schalters (15) aufweist.

8. Arbeitsgerät nach Anspruch 7,
**dadurch gekennzeichnet, dass** die Schaltzunge (25) einen gekröpften Endabschnitt (26) aufweist, wobei der gekröpfte Endabschnitt (26) zur Betätigung des Schalters (15) dient.

9. Arbeitsgerät nach Anspruch 7 oder 8,
**dadurch gekennzeichnet, dass** die Schaltzunge (25) in gesperrter Stellung zwischen der Unterseite (7) des Griffabschnittes (5) und dem Schalter (15) angeordnet ist.

10. Arbeitsgerät nach einem der Ansprüche 1 bis 9,
**dadurch gekennzeichnet, dass** an der Unterseite (7) des Griffabschnittes (5) eine Reinigungsöffnung (30) ausgebildet ist.

11. Arbeitsgerät nach Anspruch 10,
**dadurch gekennzeichnet, dass** in Betriebsstellung (10) des Sperrelementes (9) der gekröpfte Endabschnitt (26) der Schaltzunge (25) derart benachbart zur Reinigungsöffnung (30) angeordnet ist, dass Verschmutzungen im Griffabschnitt (5) über die Schaltzunge (25) aus der Reinigungsöffnung (30) befördert werden.

12. Arbeitsgerät nach einem der Ansprüche 4 bis 11,
**dadurch gekennzeichnet, dass** der Grundkörper (20) des Sperrelementes (9) eine erste Aussparung (27) aufweist, wobei der Schalter (15) in der Betriebsstellung (10) des Sperrelementes (9) in der ersten Aussparung (27) angeordnet ist.

13. Arbeitsgerät nach einem der Ansprüche 1 bis 12,
**dadurch gekennzeichnet, dass** das Schaltelement (16) des Schalters (15) in der Sperrstellung (11) des Sperrelementes (9) durch das Sperrelement (9) betätigt ist, wodurch der Schalter (15) deaktiviert ist.

14. Arbeitsgerät nach einem der Ansprüche 1 bis 13,
**dadurch gekennzeichnet, dass** das Schaltelement (16) des Schalters (15) in der Betriebsstellung (10) des Sperrelementes (9) unbetätigt ist, wodurch der Schalter (15) aktiviert ist.

15. Arbeitsgerät nach einem der Ansprüche 1 bis 14,
**dadurch gekennzeichnet, dass** der Schalter (15) eine auf das Schaltelement (16) wirkende Betätigungsfeder aufweist, und dass das Sperrelement (9) in unbetätigtem Zustand über eine erste Rückstellfeder (12) in der Sperrstellung (11) gehalten ist, wobei in der Sperrstellung (11) des Sperrelementes (9) die erste Rückstellfeder (12) derart auf die Betätigungsfeder des Schalters (15) wirkt, so dass der Schalter (15) deaktiviert ist.

## Claims

1. Hand-held work device
comprising
- a casing (2),
- a drive motor (3) arranged in the casing (2),
- a tool (4) driven by the drive motor (3),
- a handle portion (5) formed on the casing (2), wherein the handle portion (5) has an upper side (6) and, opposite the upper side (6), a lower side (7),
- an actuating element (8) for actuating the drive motor (3),
- a blocking element (9) arranged on the upper side (6) of the handle portion (5), wherein the blocking lever (9) is operatively connected to the actuating element (8), wherein the blocking element (9) blocks the actuating element (8) in a blocking position (11) and releases it in an operating position (10),
- a control circuit (17) for controlling the drive motor (3),
- a switch (15) which can be actuated via the blocking element (9) and which has a switching element (16), wherein, in the activated state, the switch (15) sends a signal to the control circuit (17),
wherein the control circuit (17) is designed in such a way that the drive motor (3) is released to operate by the control circuit (17) only when a group of operating conditions are satisfied, wherein at least one operating condition of the group of operating conditions is the receipt of the signal from the switch (15), **characterized in that** the switch (15) is arranged in the handle portion (5) between the blocking element (9) and the lower side (7) of the handle portion (5) and is oriented in such a way that the switching element (16) of the switch (15) faces the lower side (7) of the handle portion (5).

2. Work device according to Claim 1,
**characterized in that** the blocking element (9) is pivotably mounted on the casing (2) about a first pivot axis (13), wherein the blocking element (9) has a first end (21) which has a maximum end distance (l₁) from the first pivot axis (13) as measured radially with respect to the pivot axis (13), and **in that** a maximum distance between the switch (15) and the pivot axis (13) as measured radially with respect to the pivot axis (13) is less than the end distance (l₁).

3. Work device according to Claim 2,
**characterized in that** the switch (15) is arranged between the first end (21) and the first pivot axis (13) in the direction from the first end (21) towards the first pivot axis (13).

4. Work device according to Claim 2 or 3,
**characterized in that** the blocking element (9) has a basic body (20) which extends from a first longitudinal side (23) to a second longitudinal side (24) in the direction of the first pivot axis (13), wherein the switching element (16) of the switch (15) is arranged between the longitudinal sides (23, 24) in the direction of the first pivot axis (13).

5. Work device according to one of Claims 1 to 4,
**characterized in that** the switching element (16) of the switch (15) takes the form of a pushbutton.

6. Work device according to one of Claims 2 to 5,
**characterized in that** the switching element (16) of the switch (15) has a distance (m₁) from the pivot axis (13) of the blocking element (9) that is less than 80% of the end distance (l₁).

7. Work device according to one of Claims 1 to 6,
**characterized in that** the blocking element (9) has a switching tongue (25) for actuating the switching element (16) of the switch (15).

8. Work device according to Claim 7,
**characterized in that** the switching tongue (25) has an offset end portion (26), wherein the offset end portion (26) is used to actuate the switch (15).

9. Work device according to Claim 7 or 8,
**characterized in that**, in the blocked position, the switching tongue (25) is arranged between the lower side (7) of the handle portion (5) and the switch (15).

10. Work device according to one of Claims 1 to 9,
**characterized in that** a cleaning opening (30) is formed on the lower side (7) of the handle portion (5).

11. Work device according to Claim 10,
**characterized in that**, in the operating position (10) of the blocking element (9), the offset end portion (26) of the switching tongue (25) is arranged adjacent to the cleaning opening (30) in such a way that contamination in the handle portion (5) is conveyed out of the cleaning opening (30) via the switching tongue (25).

12. Work device according to one of Claims 4 to 11,
**characterized in that** the basic body (20) of the blocking element (9) has a first recess (27), wherein, in the operating position (10) of the blocking element (9), the switch (15) is arranged in the first recess (27).

13. Work device according to one of Claims 1 to 12,
**characterized in that**, in the blocking position (11) of the blocking element (9), the switching element (16) of the switch (15) is actuated by the blocking element (9), as a result of which the switch (15) is deactivated.

14. Work device according to one of Claims 1 to 13,
**characterized in that**, in the operating position (10) of the blocking element (9), the switching element (16) of the switch (15) is unactuated, as a result of which the switch (15) is activated.

15. Work device according to one of Claims 1 to 14,
**characterized in that** the switch (15) has an actuating spring acting on the switching element (16), and **in that**, in the unactuated state, the blocking element (9) is held in the blocking position (11) via a first return spring (12), wherein, in the blocking position (11) of the blocking element (9), the first return spring (12) acts on the actuating spring of the switch (15) in such a way that the switch (15) is deactivated.

## Revendications

1. Appareil de travail manuel
comprenant
- un boîtier (2),
- un moteur d'entraînement (3) disposé dans le boîtier (2),
- un outil (4) entraîné par le moteur d'entraînement (3),
- une partie de poignée (5) formée sur le boîtier (2), la partie de poignée (5) présentant un côté supérieur (6) et un côté inférieur (7) opposé au côté supérieur (6),
- un élément d'actionnement (8) pour l'actionnement du moteur d'entraînement (3),
- un élément de blocage (9) disposé sur le côté supérieur (6) de la partie de poignée (5), le levier de blocage (9) étant relié fonctionnellement à l'élément d'actionnement (8), l'élément de blocage (9) bloquant l'élément d'actionnement (8) dans une position de blocage (11) et le libérant dans une position de fonctionnement (10),
- un circuit de commande (17) pour la commande du moteur d'entraînement (3),
- un commutateur (15) pouvant être actionné par le biais de l'élément de blocage (9) et doté d'un élément de commutation (16), le commutateur (15), dans l'état activé, envoyant un signal au circuit de commande (17),
le circuit de commande (17) étant conçu de telle sorte que le moteur d'entraînement (3) n'est autorisé à fonctionner que lorsqu'un groupe de conditions de fonctionnement sont remplies par le circuit de commande (17), au moins une condition de fonctionnement du groupe de conditions de fonctionnement étant la réception du signal du commutateur (15),
**caractérisé en ce que** le commutateur (15) est disposé dans la partie de poignée (5) entre l'élément de blocage (9) et le côté inférieur (7) de la partie de poignée (5) et est orienté de telle sorte que l'élément de commutation (16) du commutateur (15) est tourné vers le côté inférieur (7) de la partie de poignée (5).

2. Appareil de travail selon la revendication 1,
**caractérisé en ce que** l'élément de blocage (9) est monté sur le boîtier (2) de manière pivotante autour d'un premier axe de pivotement (13), l'élément de blocage (9) présentant une première extrémité (21) qui présente une distance d'extrémité maximale (l₁), mesurée radialement par rapport à l'axe de pivotement (13), au premier axe de pivotement (13), et **en ce qu'**une distance maximale, mesurée radialement par rapport à l'axe de pivotement (13), entre le commutateur (15) et l'axe de pivotement (13) est inférieure à la distance d'extrémité (l₁).

3. Appareil de travail selon la revendication 2,
**caractérisé en ce que** le commutateur (15) est disposé en direction de la première extrémité (21) par rapport au premier axe de pivotement (13) entre la première extrémité (21) et le premier axe de pivotement (13).

4. Appareil de travail selon la revendication 2 ou 3,
**caractérisé en ce que** l'élément de blocage (9) présente un corps de base (20) qui s'étend en direction du premier axe de pivotement (13) à partir d'un premier côté longitudinal (23) jusqu'à un deuxième côté longitudinal (24), l'élément de commutation (16) du commutateur (15) étant disposé en direction du premier axe de pivotement (13) entre les côtés longitudinaux (23, 24).

5. Appareil de travail selon l'une des revendications 1 à 4,
**caractérisé en ce que** l'élément de commutation (16) du commutateur (15) est réalisé sous la forme d'un bouton-poussoir.

6. Appareil de travail selon l'une des revendications 2 à 5,
**caractérisé en ce que** l'élément de commutation (16) du commutateur (15) présente une distance (m₁) à l'axe de pivotement (13) de l'élément de blocage (9) qui est inférieure à 80% de la distance d'extrémité (l₁).

7. Appareil de travail selon l'une des revendications 1 à 6,
**caractérisé en ce que** l'élément de blocage (9) présente une languette de commutation (25) pour l'actionnement de l'élément de commutation (16) du commutateur (15).

8. Appareil de travail selon la revendication 7,
**caractérisé en ce que** la languette de commutation (25) présente une partie d'extrémité coudée (26), la partie d'extrémité coudée (26) servant à l'actionnement du commutateur (15).

9. Appareil de travail selon la revendication 7 ou 8,
**caractérisé en ce que** la languette de commutation (25) est disposée, dans la position bloquée, entre le côté inférieur (7) de la partie de poignée (5) et le commutateur (15).

10. Appareil de travail selon l'une des revendications 1 à 9,
**caractérisé en ce qu'**une ouverture de nettoyage (30) est formée sur le côté inférieur (7) de la partie de poignée (5).

11. Appareil de travail selon la revendication 10,
**caractérisé en ce que**, dans la position de fonctionnement (10) de l'élément de blocage (9), la partie d'extrémité coudée (26) de la languette commutation (25) est disposée de manière adjacente à l'ouverture de nettoyage (30) de telle sorte que des salissures dans la partie de poignée (5) sont transportées hors de l'ouverture de nettoyage (30) par le biais de la languette de commutation (25).

12. Appareil de travail selon l'une des revendications 4 à 11,
**caractérisé en ce que** le corps de base (20) de l'élément de blocage (9) présente un premier évidement (27), le commutateur (15) étant disposé dans le premier évidement (27) dans la position de fonctionnement (10) de l'élément de blocage (9).

13. Appareil de travail selon l'une des revendications 1 à 12,
**caractérisé en ce que** l'élément de commutation (16) du commutateur (15) est actionné par l'élément de blocage (9) dans la position de blocage (11) de l'élément de blocage (9), de sorte que le commutateur (15) soit désactivé.

14. Appareil de travail selon l'une des revendications 1 à 13,
**caractérisé en ce que** l'élément de commutation (16) du commutateur (15) n'est pas actionné dans la position de fonctionnement (10) de l'élément de blocage (9), de sorte que le commutateur (15) soit activé.

15. Appareil de travail selon l'une des revendications 1 à 14,
**caractérisé en ce que** le commutateur (15) présente un ressort d'actionnement agissant sur l'élément de commutation (16), et **en ce que** l'élément de blocage (9), dans l'état non actionné, est retenu dans la position de blocage (11) par le biais d'un premier ressort de rappel (12), le premier ressort de rappel (12) agissant sur le ressort d'actionnement du commutateur (15) dans la position de blocage (11) de l'élément de blocage (9), de sorte que le commutateur (15) soit désactivé.
